(19) 

**Europäisches Patentamt**
**European Patent Office**
**Office européen des brevets**

(11) **EP 4 524 304 A1**

(12) **EUROPEAN PATENT APPLICATION**
published in accordance with Art. 153(4) EPC

(43) Date of publication:
**19.03.2025 Bulletin 2025/12**

(21) Application number: **23860861.6**

(22) Date of filing: **30.08.2023**

(51) International Patent Classification (IPC):
*D02G 3/48* *(2006.01)*   *D02G 3/28* *(2006.01)*
*D02G 3/04* *(2006.01)*   *D02G 3/36* *(2006.01)*
*D01F 6/80* *(2006.01)*   *D01D 1/10* *(2006.01)*
*D01D 1/06* *(2006.01)*   *D01D 5/06* *(2006.01)*
*B60C 9/00* *(2006.01)*

(52) Cooperative Patent Classification (CPC):
**B60C 9/00; D01D 1/06; D01D 1/10; D01D 5/06;**
**D01F 6/80; D02G 3/04; D02G 3/28; D02G 3/36;**
**D02G 3/48**

(86) International application number:
**PCT/KR2023/012852**

(87) International publication number:
**WO 2024/049185 (07.03.2024 Gazette 2024/10)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **01.09.2022   KR 20220110746**

(71) Applicant: **Kolon Industries, Inc.**
**Seoul 07793 (KR)**

(72) Inventors:
• **LEE, Min Ho**
  **Seoul 07793 (KR)**
• **JEON, Ok Hwa**
  **Seoul 07793 (KR)**
• **YIM, Jongha**
  **Seoul 07793 (KR)**
• **LEE, Hyo Jin**
  **Seoul 07793 (KR)**

(74) Representative: **Vossius & Partner**
**Patentanwälte Rechtsanwälte mbB**
**Siebertstrasse 3**
**81675 München (DE)**

(54) **CORD AND METHOD FOR MANUFACTURING SAME**

(57)    The present application relates to a cord including para-aramid fiber, a method for manufacturing the same, a reinforcing material and a tire comprising the cord. Specifically, as the cord includes a para-aramid fiber having large crystal size and high crystallinity and thus exhibiting excellent mechanical properties, it has high resistance to deformation due to external force, and thus can be usefully used as a tire reinforcing material.

EP 4 524 304 A1

**Description**

**[TECHNICAL FIELD]**

The present application relates to a cord comprising para-aramid fiber, a method for manufacturing the same, a composite (or a reinforcing material) comprising the cord and a tire.

**[BACKGROUND ART]**

Aramid fibers comprising aromatic dicarboxylic acid components and aromatic diamine components, particularly para-aramid fibers such as polyparaphenylene terephthalamide (PPTA) fibers, are excellent in tenacity, elastic modulus and heat resistance, and thus, is widely used in industrial applications and clothing material applications. However, mechanical properties such as tenacity and elastic modulus are not yet sufficient for some applications, and efforts have been made to provide fibers with more excellent physical properties.

Meanwhile, aramid fibers are also used in cords, which are tire reinforcing materials. For example, nylon fibers and aramid fibers are secondarily twisted together to produce a tire cord. By the way, nylon is a fiber with a relatively low modulus, and has a drawback in that it greatly deforms during tension (external force). On the other hand, because aramid fibers have a relatively high modulus, the deformation due to tension (external force) is small. These differences in the characteristics are due to the morphology and microstructure of the molecular chains that constitutes each fiber. Specifically, aramid having linear polymer chains has a relatively high crystallinity due to hydrogen bonds between molecular chains, and thus has a high modulus.

Considering these points, there is a need to develop an aramid fiber with improved microstructure and an article (e.g., cord) comprising the same so that the tire cord can exhibit small deformation against an external force.

**[DETAILED DESCRIPTION OF THE INVENTION]**

**[Technical Problem]**

It is an object of the present application to provide an article (e.g. cord) comprising, as one component, a para-aramid fiber having large crystal size and high crystallinity and thus exhibiting excellent mechanical properties (e.g., tensile properties).

It is another object of the present application to provide a tire cord having excellent mechanical properties (e.g., tensile properties).

It is yet another object of the present application to provide a tire cord having high resistance to deformation when an external force is applied, such as having a low creep strain (%).

All of the above and other objects of the present application can be solved by the present application which is described in detail below.

**[Technical Solution]**

According to a specific embodiment of the present application, there is provided a cord comprising two different types of primarily-twisted yarns, wherein one of the primarily-twisted yarns is formed by imparting twists to a para-aramid fiber that satisfies predetermined characteristics; and a method for manufacturing the same.

Specifically, the inventors of the present application have found through experiments that for example, when para-aramid fibers having excellent mechanical properties (e.g. tensile properties) are used in manufacturing cords used as tire reinforcing materials or the like, cords formed so as to include the para-aramid fiber of the present application described below can exhibit superior mechanical properties (e.g., stiffness, tenacity, and/or elongation) and have lower creep strain than cords (in different cases), and completed the invention of this application.

As used herein, the term "cord" may mean an article including at least two or more different fibers. For example, the cord may mean a hybrid cord including at least two different primarily twisted yarns. Such a cord may be a plied yarn formed by twisting (i.e., secondarily twisting) two or more primarily twisted yarns together.

In a specific embodiment of the present application, the cord may be a raw cord or a dipped cord. The dipped cord means that a coating agent such as adhesive is coated onto the fiber (plied yarn). Conversely, in the state where a coating agent is not coated onto the fiber, a cord containing at least two or more fibers may be called a raw cord. In a specific embodiment of the present application, the cord has a plied yarn structure in which at least a first primarily-twisted yarn and a second primarily-twisted yarn are secondarily twisted together (i.e., made by twisting the primarily-twisted yarns).

As used herein, the term "primary twisting" means twisting a yarn or a filament in an either direction, and the term "primarily twisted yarn" may refer to a single ply yarn made by twisting yarn or filament in an either direction, that is, a single yarn. Although not particularly limited, the primary twisting may mean, for example, twisting in a clockwise direction or in a counterclockwise direction.

Additionally, the term "plied yarn" as used herein may mean a yarn made by twisting two or more primarily twisted yarns together in an either direction. The term "secondary twisting" may mean twisting in the opposite direction to the twisting in which the primary twisting is performed. For example, the secondary twisting may mean twisting in a clockwise direction or in a counterclockwise direction.

The primarily twisted yarn or plied yarn made by imparting twists in an either direction may have a predetermined twist number. At this time, the term "twist number" means the number of twists per 1 m, and its unit may be TPM (Twist Per Meter).

Below, the cord of this application and a method for manufacturing the same will be described in more detail.

In one embodiment of the present application, this application relates to a cord comprising a para-aramid fiber. Although not particularly limited, the cord can be used as a rubber reinforcing material, more specifically, a tire reinforcing material.

Specifically, the cord may be formed by plying a para-aramid fiber (A) that satisfy the characteristics described below and a dissimilar fiber (B) that is different from the para-aramid fiber.

Specifically, the para-aramid fiber used for forming the cord is a para-aramid fiber having (i) a crystallinity of 67% or more, (ii) an apparent crystal size based on 110 plane of 5.8 to 7.0 nm, (iii) a total fineness of 200 to 1,600 deniers, and (iv) a tenacity of 22 g/d or more.

Unless otherwise specified herein, the measured values for physical properties such as tensile properties and microstructures of para-aramid fibers are values measured for fibers obtained after normal spinning, coagulation, and drying, which are measured values for the fiber without any possible heat treatment process that can be added to the fiber production method.

When a cord is manufactured by plying a para-aramid fiber (A) having a large crystal size and high crystallinity and thus exhibiting excellent mechanical properties (e.g., tensile properties) with a dissimilar fiber (B) as described above, it is possible to provide a cord having excellent mechanical properties (e.g., stiffness, tenacity and/or elongation) and a low creep strain (%) as confirmed in experiments described below.

In one illustrative embodiment, a para-aramid fiber having the above characteristics may be formed from a para-aramid polymer prepared by a predetermined polymerization method. Specifically, the para-aramid fiber can be provided through a method for producing para-aramid fiber which comprises a step of filtering a reaction raw material to remove impurities; a step of adding aromatic diamine to a mixed solvent containing an organic solvent and an inorganic salt to form a slurry; a step of adding aromatic diacid halide to a reactor containing the slurry in three or more times and reacting the mixture to form a para-aramid polymer; and a step of spinning a spinning dope containing the para-aramid polymer to produce a fiber, wherein in the step of forming the polymer, the difference between the cooling water temperature at a cooling water inlet side and the temperature at a cooling water outlet side for cooling the reactor during primary and secondary addition of the aromatic diacid halide is controlled to be within 50°C.

The above production method can minimize residual amount of inorganic impurities in the final para-aramid polymer through the step of removing impurities from reaction raw materials to thereby provide a para-aramid fiber with excellent mechanical strength.

The reaction raw material includes an organic solvent, an inorganic salt, an aromatic diamine, and an aromatic diacid halide. In the step of filtering the reaction raw materials to remove impurities, at least one of the listed reaction raw materials can be filtered to remove impurities contained in the raw material. For example, in the step of filtering the reaction raw materials to remove impurities, reaction raw materials from which impurities have been removed can be prepared by filtering each of the organic solvent, inorganic salt, aromatic diamine, and aromatic diacid halide.

In the step of filtering a reaction raw material to remove impurities, the reaction raw material can be filtered using a filter having a diameter of 0.01 to 1.0 $\mu$m, 0.03 to 0.7 $\mu$m, or 0.05 to 0.5 $\mu$m. The diameter may be the major axis length of the filtration hole of the filter. By using a filter having this diameter, the content of inorganic impurities in the reaction system can be reduced to 1 ppm or less. Further, by using a filter having the above diameter, the content of inorganic impurities in the polymerized polymer can be reduced to 50 ppb or less. The lower limit of the inorganic impurity content may be 0 ppb or more.

The order in which the step of filtering the reaction raw material to remove impurities is performed is not particularly limited. Specifically, the step of filtering the reaction raw material to remove impurities may be performed before the step of forming the slurry, or may be performed during the step of forming the slurry. As an example, if the step of filtering the reaction raw material to remove impurities is performed during the step of forming the slurry, an organic solvent and an inorganic salt are mixed, and then the mixture is filtered to prepare a mixed solvent, and aromatic diamine from which impurities have been removed can be added thereto to form a slurry.

On the other hand, in the step of forming the slurry, an inorganic salt can be added to the organic solvent to prepare a mixed solvent in order to increase the degree of polymerization of the para-aramid polymer.

The inorganic salt contained in the mixed solvent may include a halogenated alkali metal salt or a halogenated alkaline earth metal salt. In one example, the inorganic salt may include at least one selected from the group consisting of CaCl$_2$, LiCl, NaCl, KCl, LiBr, and KBr. Such inorganic salts may be included in an amount of 0.01 to 15 wt.%, 0.05 to 13 wt.%, 0.1 to 11 wt.%, or 1 to 10 wt.% based on the total weight of the mixed solvent.

The organic solvent contained in the mixed solvent may include at least one selected from the group consisting of N-methyl-2-pyrrolidone, N,N-dimethylacetamide, hexamethylphosphoramide, N,N,N',N'-tetramethyl urea, N,N-dimethylformamide and dimethyl sulfoxide. The organic solvent may be included in the remaining amount excluding the inorganic salt based on the total weight of the mixed solvent.

In the step of forming the slurry, the mixed solvent and aromatic diamine may be mixed so that the content of aromatic diamine in the slurry is 0.5 to 10 wt.%. As the aromatic diamine, at least one selected from the group consisting p-phenylenediamine, 4,4'-oxydianiline, 2,6-naphthalenediamine, 1,5-naphthalenediamine, 4,4'-diaminobenzanilide, and the like may be used.

Subsequently, in the step of forming the para-aramid polymer, an aromatic diacid halide is added to the previously prepared slurry and reacted to prepare a para-aramid polymer. As the aromatic diacid halide, at least one selected from the group consisting of terephthaloyl dichloride, [1,1'-biphenyl]-4,4'-dicarbonyl dichloride, 4,4'-oxybis(benzoyl chloride), naphthalene-2,6-dicarbonyl dichloride, naphthalene-1,5-dicarbonyl dichloride, and the like may be used.

Since the aromatic diacid halide reacts with the aromatic diamine at a molar ratio of 1:1, the molar ratio of the aromatic diacid halide to the aromatic diamine may be about 0.9 to 1.1.

The polymerization reaction between the aromatic diamine and the aromatic diacid halide progresses at a rapid rate while generating heat. Therefore, conventionally, a part of the aromatic diacid halide was first added to perform a preliminary polymerization, and then the remaining aromatic diacid halide was added to minimize the difference in the degree of polymerization between the polymers finally obtained.

The above production method uses reaction raw materials from which more impurities have been removed than in conventional methods, and controls the conditions and method of introducing the reaction raw materials, thereby being able to provide a para-aramid fiber that not only has a low difference in the degree of polymerization between polymers, but also has a large crystal size and a high crystallinity.

Specifically, in the above production method, the aromatic diacid halide is added in three or more times instead of the conventional method of adding the aromatic diacid halide in two times, and the temperature difference between the cooling water entering and leaving the reactor during the primary and secondary addition of aromatic diacid halide is controlled to be within 50°C, thereby being possible to provide a para-aramid fiber with the desired large crystal size and high crystallinity.

Specifically, in the step of forming the polymer, a reactor through which cooling water can enter and leave is used.

In the step of forming the slurry, the slurry may be prepared in a reactor, or the slurry may be prepared in a vessel other than the reactor and then introduced into the reactor.

In the step of forming the polymer, the aromatic diacid halide is added in three or more times to the reactor containing the slurry. Particularly, the aromatic diacid halide can be added primarily and secondarily in a state where difference between the cooling water temperature at a cooling water inlet side and the temperature at a cooling water outlet side is controlled to be 0°C to 50°C.

More specifically, during the primary addition of the aromatic diacid halide, the temperature difference of cooling water at the cooling water inlet and the cooling water outlet can be controlled to 0°C to 50°C, 0°C to 40°C, 0°C to 35°C, or 0°C to 30°C.

In order to control the difference between the cooling water temperature at a cooling water inlet side and the temperature at a cooling water outlet side to be within 50°C, the stirring speed of the reactor can be adjusted to 10 to 1000 rpm, 10 to 900 rpm, 10 to 700 rpm, or 10 to 500 rpm in a state where the cooling water is circulating in the reactor.

The content of the aromatic diacid halide that is primarily added may be adjusted to 20 to 40 mol% or 25 to 35 mol% with respect to the total content of the aromatic diacid halide that is added as a whole. Within this range, a prepolymer having a molecular chain of appropriate length can be formed.

After primary addition of the aromatic diacid halide, prepolymerization can be performed by stirring at a temperature of 0°C to 45°C for 1 to 30 minutes or 5 to 15 minutes.

Subsequently, in order to control the difference between the cooling water temperature at a cooling water inlet side and the temperature at a cooling water outlet side to be within 50 °C again, the stirring speed of the reactor can be adjusted to 10 to 1000 rpm, 10 to 900 rpm, 10 to 700 rpm, or 10 to 500 rpm in a state where the cooling water is circulating in the reactor.

The content of the aromatic diacid halide that is added secondarily may be adjusted to 20 to 75 mol%, 40 to 75 mol%, or 50 to 70 mol% with respect to the total content of the aromatic diacid halide that is added as a whole. Within this range, it is possible to form a polymer that can provide fibers with a large crystal size and high crystallinity while minimizing the difference in the degree of polymerization between polymers.

After secondary addition of the aromatic diacid halide, polymerization can be performed by stirring at a temperature of 0°C to 45°C for 1 minute to 30 minutes or 5 minutes to 15 minutes.

Thereafter, the remaining amount of aromatic diacid halide is added in one or more times, and then additional polymerization is performed to finally prepare a para-aramid polymer. The additional polymerization may be performed by stirring at a temperature of 0°C to 45°C for 5 minutes to 1 hour or 10 minutes to 40 minutes.

After the step of forming the polymer, any one or more of a step of separating the resulting polymer from the polymerization reaction system, a step of washing the polymer, a step of neutralizing the polymer, and a step of pulverizing the polymer can be performed regardless of the stated order.

The para-aramid polymer may have an intrinsic viscosity of 4.0 dl/g or more, 5.0 dl/g or more, or 5.3 dl/g or more, and 9.0 dl/g or less.

Additionally, the para-aramid polymer may have an intrinsic viscosity deviation of 1.0 dl/g or less, 0.9 dl/g or less, or 0.8 dl/g or less. As the intrinsic viscosity deviation of the para-aramid polymer is lower, it is more advantageous, so that the lower limit of the intrinsic viscosity deviation may be 0 dl/g or more.

The intrinsic viscosity deviation can be determined by dividing the para-aramid polymer where washing and drying are completed into a group of 2 mm or more, a group of 1 mm or more and less than 2 mm, and a group of less than 1 mm using standard sieves with mesh sizes of 1 mm and 2 mm, respectively, measuring the intrinsic viscosity of each group and then calculating the difference between the maximum and minimum values of the average intrinsic viscosity of the three groups.

Since the para-aramid polymer is manufactured from reaction raw materials from which impurities have been removed, there may be very little or no inorganic impurities remaining in the polymer. In one example, the content of inorganic impurities in the polymer may be 50 ppb or less.

The para-aramid polymer may be poly(para-phenylene terephthalamide), poly(4,4'-benzanilide terephthalamide), poly(paraphenylene-4,4'-biphenylene-dicarbonyl amide), poly(paraphenylene-2,6-naphthalenedicarbonyl amide) or copolymers thereof. In one example, the para-aramid polymer may be poly(para-phenylene terephthalamide).

On the other hand, in the step of producing the fiber, a spinning dope containing the polymer prepared in the step of forming the polymer is spun to provide a fiber.

Sulfuric acid having a concentration of 97 to 102 wt.% may be used as a solvent for the spinning dope. As the above-mentioned solvent, chlorosulfuric acid, fluorosulfuric acid, or the like can also be used instead of sulfuric acid.

The viscosity of the spinning dope for producing fibers increases as the concentration of para-aramid polymer in the spinning dope increases. However, when the concentration of para-aramid polymer exceeds a critical concentration, the viscosity of the spinning dope decreases rapidly. At this time, the spinning dope changes from optically isotropic to optically anisotropic without forming a solid phase. The optically anisotropic dope can provide high tenacity para-aramid fibers without a separate drawing process due to its structural and functional properties. Therefore, the concentration of para-aramid polymer in the spinning dope is preferred to exceed the critical concentration, but if the concentration is too high, the viscosity of the spinning dope may become too low. Therefore, the spinning dope may include a para-aramid polymer in an amount of 10 to 25 wt.% with respect to the total weight of the spinning dope.

In the step of producing the fiber, a spinning step of spinning the spinning dope can be performed.

In the spinning step, the spinning dope may be spun into filaments through an air-gap wet spinning.

The air-gap wet spinning is a method in which an air-gap is placed between the spinneret and the coagulation bath surface. According to such an air-gap wet spinning method, the spinning dope can pass through the spinneret via an air gap and be spun into a coagulation tank containing a coagulating liquid.

In the spinning step, the thickness of the fiber can be controlled through the pressure and spinning speed when extruding the spinning dope through the spinneret.

The spinneret may comprise a plurality of holes through which spinning dope can be spun.

Specifically, the spinneret may comprise 50 to 3000 holes, 100 to 2000 holes, 120 to 1500 holes, or 500 to 1200 holes. Within this range, it is possible to provide a para-aramid fiber that have a large crystal size and high crystallinity and exhibit excellent tensile properties.

The diameter of the hole formed in the spinneret must be adjusted to an appropriate size, which can improve both the molecular orientation on the filament surface and inside. In this respect, the diameter of the hole of the spinneret can be adjusted to be 50 $\mu$m or more and 100 $\mu$m or less.

In the spinning step, the spinning dope may be spun at a spinning speed of 80 m/min or more and 800 m/min or less.

Specifically, the spinning dope may be spun at a spinning speed of 80 to 800 m/min, 100 to 800 m/min, 300 to 800 m/min, 500 to 700 m/min, 550 to 660 m/min, 580 to 650 m/min, 580 to 640 m/min, or 590 to 610 m/min. Within this range, it is possible to provide a para-aramid fiber that has a large crystal size and high crystallinity and exhibit excellent tensile properties.

The dope spun through the spinneret is obtained as unsolidified filaments in which sulfuric acid is distributed over a matrix with uniform distribution of para-aramid polymer. Such uncoagulated filaments can be solidified by passing through a coagulation tank containing a coagulating liquid via an air gap.

The air gap may be an air layer or an inert gas layer. In one example, the air gap may be a nitrogen layer supplied

with dry nitrogen ($N_2$). The length of the air gap can be adjusted from 0.1 to 15 cm.

The dope that is spun from the spinneret and passes through the air gap forms a filament while the sulfuric acid inside is removed in the process of passing through the coagulation tank. At this time, if sulfuric acid is rapidly removed from the filament surface, the surface of the filament may solidify before the sulfuric acid contained therein is released, which may reduce the uniformity of the inside and outside of the filament. Therefore, the coagulating liquid contained in the coagulation tank is preferably an aqueous sulfuric acid solution containing sulfuric acid.

Specifically, the coagulating liquid contained in the coagulation tank may be an aqueous sulfuric acid solution in which sulfuric acid is added to water. Additionally, to the coagulating liquid, a monohydric alcohol (monol) such as methanol, ethanol, and propanol; dihydric alcohols (diol) such as ethylene glycol or propylene glycol; or a trihydric alcohol (triol) such as glycerol may be further added as necessary.

The temperature of the coagulating liquid is preferably 1 to 10°C. If the temperature of the coagulating liquid is too low, it may be difficult for sulfuric acid to escape from the filament. If the temperature of the coagulating liquid is too high, sulfuric acid may rapidly escape from the filament, which may reduce the uniformity of the filament.

A coagulation tube may be formed at the lower part of the coagulation tank. The coagulation tube is connected to the coagulation tank, and a plurality of jetting ports may be formed in the coagulation tube. In this case, the jetting port is connected to a predetermined jet device, so that the coagulating liquid jetted from the jet device is jetted onto the filament passing through the coagulating tube via the jetting port. The plurality of jetting ports are preferably aligned so that the coagulating liquid is jetted symmetrically with respect to the filament. The jet angle of the coagulating liquid is preferably 0 to 85° with respect to the axial direction of the filament. Especially in commercial production processes, a jet angle of 20 to 40° is suitable.

In the step of producing the fiber, following the coagulation step, a washing step can be performed to remove sulfuric acid remaining in the coagulated filament.

The washing step may be performed by jetting water or a mixed solution of water and an alkaline solution onto the solidified filament.

The washing step may be performed in multiple stages. For example, the coagulated filament may be primarily washed with a 0.1 to 1.5 wt.% aqueous caustic solution, and then secondarily washed with a more dilute caustic aqueous solution.

In the step of producing the fiber, following the coagulation and washing steps, a drying step may be performed to adjust the moisture content remaining in the filament.

The drying step may be performed by adjusting the time that the filament contacts a heated drying roll or by adjusting the temperature of the drying roll.

The monofilament constituting the finally obtained para-aramid fiber may have a fineness of 1.0 to 2.5 de (denier).

And, the para-aramid fiber includes a plurality of the monofilaments, and may have a total fineness of 200 to 1,600 de, 200 to 400 de, 800 to 1,000 de, 1,000 to 1,100 de or 1,400 to 1,600 de.

The para-aramid fibers produced according to this production method have a large crystal size and exhibits high crystallinity and orientation and thus can exhibit excellent mechanical properties (e.g., tensile properties).

The para-aramid fiber is produced according to the above production method and thus, may have increased crystal size.

In one example, the para-aramid fiber has an apparent crystal size based on 110 plane of 5.8 nm or more, 5.9 nm or more, 6.0 nm or more, 6.1 nm or more, or 6.2 nm or more, and 7.0 nm or less, 6.8 nm or less, 6.7 nm or less, or 6.6 nm or less. Further, the para-aramid fiber has an apparent crystal size based on 200 plane of 5.0 nm or more, 5.5 nm or more, or 5.6 nm or more, and 6.5 nm or less, 6.4 nm or less, 6.3 nm or less, or 6.2 nm or less.

The apparent crystal size is an apparent crystal size analyzed from the X-ray diffraction pattern, and for a more detailed measurement method, refer to the method described in Experimental Examples described later. The para-aramid fiber may have a high crystallinity as it is produced according to the above production method.

Specifically, the para-aramid fiber may have a crystallinity of 67% or more, 67.5% or more, 68% or more, 68.5% or more, 69% or more, 69.5% or more, 70% or more, 70.5% or more, 71% or more, 71.5% or more, 72% or more, 72.5% or more, 73.0% or more, 73.5% or more, 74.0% or more, 74.5% or more, 75.0% or more, and 78% or less, 77.5% or less, 77.0% or less, 76.5% or less, 76.0% or less, 75.5% or less, 75% or less, 74.5% or less, 74.0% or less, 73.5% or less, or 73% or less.

The crystallinity is a crystallinity analyzed from an X-ray diffraction pattern, and for a more detailed measurement method, refer to the method described in Experimental Examples described below.

The para-aramid fiber may exhibit a high degree of orientation as it is produced according to the above production method. That is, the para-aramid fibers may have a high orientation degree and a small orientation angle.

In one example, the para-aramid fiber may have an orientation angle based on 110 plane of 2° or more, 3° or more, 4° or more, 5° or more, 6° or more, or 7° or more. And, the orientation angle based on 110 plane may be 12° or less, 11.5° or less, 11° or less, 10.5° or less, 10° or less, 9.5° or less, 9.4° or less, 9.3° or less, 9.2° or less, 9.1° or less, or 9.0° or less. Further, the para-aramid fiber may have an orientation angle based on 200 plane of 2° or more, 3° or more, 4° or more, 5° or more, 6° or more, 7° or more, or 8° or more. And, the orientation angle based on 200 plane may be 13° or less, 12° or less, 11.5° or less, 11.4° or less, 11.3° or less, 11.2° or less, 11.1° or less, 11° or less, 10.5° or less, 10.4° or less, or 10.3° or less.

The orientation angle is an orientation angle analyzed from an X-ray diffraction pattern, and for a more detailed measurement method, refer to the method described in Experimental Examples described below.

As the para-aramid fiber is produced according to the above production method, paracrystalline parameter can be minimized.

In one example, the para-aramid fiber may have a paracrystalline parameter of 1.00% or more or 1.30%, and 1.85% or less, 1.80% or less, 1.70% or less, or 1.60% or less.

The paracrystalline parameter is a paracrystalline parameter analyzed from an X-ray diffraction pattern, and for a more detailed measurement method, refer to the method described in Experimental Example described below.

As the para-aramid fiber has a large crystal size and high crystallinity, it can exhibit excellent tensile properties.

In one example, the para-aramid fiber may have a tenacity of 22 g/d or more, 22.5 g/d or more, 23 g/d or more, 23.5 g/d or more, 24 g/d or more, or 25 g/d or more, and 30 g/d or less or 28 g/d or less. In addition, the para-aramid fiber may have a Young's modulus of 750 g/d or more, 760 g/d or more, 780 g/d or more, 790 g/d or more, 800 g/d or more, or 810 g/d, and 900 g/d or less, 880 g/d or less, or 860 g/d or less. Further, the para-aramid fiber may have an elongation of 2.0% or more, 2.5% or more, 3.0% or more, 3.1% or more, 3.2% or more, 3.3% or more, or 3.4% or more, and 4.5% or less or 4.0% or less.

The tensile properties such as tenacity, Young's modulus and elongation are measured according to the ASTM D885-Standard Test Method for samples with a twist multiplier of 1.1, and for a more detailed measurement method, refer to the method described in Test Example described below.

The cord exhibits different characteristics (physical properties) depending on its thickness. For example, if the cord is used as tire reinforcing material, a thicker cord improves tire performance in terms of stiffness and modulus, but the thickness of the rubber covering the top and bottom of the fabric increases and the size of the tire increases, resulting in an increase in weight. Therefore, it is unsuitable for tires where fuel efficiency and weight reduction are important. In addition, when the thickness of the cord is thin, it is advantageous for reducing the weight of the tire, but the stiffness and modulus decreases, so that the cord cannot fully exhibit its performance as a reinforcing material. In this application, taking this into consideration, the fineness of the fibers forming the cord (each fiber forming the primarily twisted yarn) is appropriately adjusted.

In one illustrative embodiment, the para-aramid fiber or the primarily twisted yarn (first primarily-twisted yarn) formed therefrom may have a fineness of 200 to 1600 denier (de). For example, the lower limit of the fineness of the para-aramid fiber may be 300 denier or more, 400 denier or more, 500 denier or more, 600 denier or more, 700 denier or more, 800 denier or more, 900 denier or more, 1000 denier or more, or 1100 denier or more, and the upper limit may be, for example, 1500 denier or less, 1400 denier or less, 1300 denier or less, 1200 denier or less, 1100 denier or less, or 1000 denier or less. Although not particularly limited, the para-aramid fiber of 900 to 1100 denier or 1400 to 1600 denier may be used as the primarily twisted yarn.

In one illustrative embodiment, the dissimilar fiber or the primarily twisted yarn (second primarily-twisted yarn) formed therefrom may have a fineness of 600 to 2000 denier (de). For example, the lower limit of the fineness of the dissimilar fiber may be 650 denier or more, 700 denier or more, 750 denier or more, 800 denier or more, or 850 denier or more. And, the upper limit may be, for example, 1900 denier or less, 1800 denier or less, 1700 denier or less, 1600 denier or less, 1500 denier or less, 1400 denier or less, 1300 denier or less, 1200 denier or less, 1100 denier or less, 1000 denier or less, or 900 denier or less. Although not particularly limited, the dissimilar fibers of 700 to 900 denier or 1100 to 1400 denier may be used as a primarily twisted yarn.

The kind of the dissimilar fiber (B) that is plied together with the para-aramid fiber (A) to form a cord is not particularly limited, but for example, a nylon fiber or a polyester fiber can be used for manufacturing the cord. That is, the cord of the present application may be formed by plying a primarily-twisted yarn containing a para-aramid fiber and a primarily twisted yarn containing a dissimilar fiber such as a nylon fiber or a polyester fiber.

The degree of twisting of the primarily twisted yarns and/or twisting (i.e., secondary twisting) between the primarily twisted yarns affects the physical properties of the cord. Generally, when the twist is high, the cord has a helical inclination in the vertical direction, so that the elongation (or breaking elongation, or intermediate elongation) increases and the modulus decreases, and an external force is applied due to the twist, thereby decreasing the tenacity (or stiffness). Conversely, when the twist is low, the fibers are well arranged in the cord direction (the helical inclination value is low in the vertical direction of the cord), so the tenacity (or stiffness) and modulus are increased compared to high twist, but the elongation is low. In the present application, in consideration of the above points, the twist number of each primarily twisted yarn and the twist number between the primarily twisted yarns can be adjusted.

In one illustrative embodiment, the (A) para-aramid fiber may be a primarily twisted yarn (first primarily-twisted yarn) imparted with twists of 250 to 600 TPM, and the (B) dissimilar fiber may be a primarily twisted yarn (second primarily-twisted yarn) imparted with twists of 250 to 600 TPM. And, the cord may be formed by secondarily twisting the first primarily-twisted yarn and the second primarily-twisted yarn together.

In a specific embodiment of the present application, the twist number (first twist number) of the first primarily-twisted yarn containing the (A) para-aramid fiber and the twist number (second twist number) of the second primarily-twisted yarn containing the (B) dissimilar fiber may be 260 TPM or more, 270 TPM or more, 280 TPM or more, 290 TPM or more, 300 TPM or more, 310 TPM or more, 320 TPM or more, 330 TPM or more, 340 TPM or more, 350 TPM or more, 360 TPM or more, 370 TPM or more, 380 TPM or more, 390 TPM or more, 400 TPM or more, 410 TPM or more, 420 TPM or more, 430 TPM or more, 440 TPM or more, 450 TPM or more, 460 TPM or more, 470 TPM or more, 480 TPM or more, 490 TPM or more, 500 TPM or more, 510 TPM or more, 520 TPM or more, 530 TPM or more, 540 TPM or more, 550 TPM or more, 560 TPM or more, 570 TPM or more, 580 TPM or more, or 590 TPM or more. And, the upper limit of the twist number may be, for example, 590 TPM or less, 580 TPM or less, 570 TPM or less, 560 TPM or less, 550 TPM or less, 540 TPM or less, 530 TPM or less, 520 TPM or less, 510 TPM or less, 500 TPM or less, 490 TPM or less, 480 TPM or less, 470 TPM or less, 460 TPM or less, 450 TPM or less, 440 TPM or less, 430 TPM or less, 420 TPM or less, 410 TPM or less, 400 TPM or less, 390 TPM or less, 380 TPM or less, 370 TPM or less, 360 TPM or less, 350 TPM or less, 340 TPM or less, 330 TPM or less, 320 TPM or less, 310 TPM or less, 300 TPM or less, 290 TPM or less, 280 TPM or less, 270 TPM or less, or 260 TPM or less.

In one illustrative embodiment, the twist number (the first twist number) of the first primarily-twisted yarn containing the para-aramid fiber and the twist number (second twist number) of the second primarily-twisted yarn containing the dissimilar fiber may be the same or different. In order to impart the twist number as described above, for example, a CC twist machine (Cable Corder Twist machine) or a ring twister can be used, wherein the number of twists for each primarily twisted yarn being the same means that the number of twists for each primarily twisted yarn is set to be the same when using the device. However, depending on the equipment or process conditions (e.g., annealing in the drying stage after dipping in an adhesive solution), a difference in the number of twists may occur within about 15%, within 10%, or within 5% of the set value.

In one illustrative embodiment, the cord can be formed by secondary twisting the first primarily-twisted yarn and the second primarily-twisted yarn within a range of 250 to 600 TPM. For example, when the above-mentioned first and second primarily twisted yarns are secondarily twisted together, the twist number (third twist count) may be 260 TPM or more, 270 TPM or more, 280 TPM or more, 290 TPM or more, 300 TPM or more, 310 TPM or more, 320 TPM or more, 330 TPM or more, 340 TPM or more, 350 TPM or more, 360 TPM or more, 370 TPM or more, 380 TPM or more, 390 TPM or more, 400 TPM or more, 410 TPM or more, 420 TPM or more, 430 TPM or more, 440 TPM or more, 450 TPM or more, 460 TPM or more, 470 TPM or more, 480 TPM or more, 490 TPM or more, 500 TPM or more, 510 TPM or more, 520 TPM or more, 530 TPM or more, 540 TPM or more, 550 TPM or more, 560 TPM or more, 570 TPM or more, 580 TPM or more, or 590 TPM or more. And, the upper limit thereof may be, for example, 590 TPM or less, 580 TPM or less, 570 TPM or less, 560 TPM or less, 550 TPM or less, 540 TPM or less, 530 TPM or less, 520 TPM or less, 510 TPM or less, 500 TPM or less, 490 TPM or less, 480 TPM or less, 470 TPM or less, 460 TPM or less, 450 TPM or less, 440 TPM or less, 430 TPM or less, 420 TPM or less, 410 TPM or less, 400 TPM or less, 390 TPM or less, 380 TPM or less, 370 TPM or less, 360 TPM or less, 350 TPM or less, 340 TPM or less, 330 TPM or less, 320 TPM or less, 310 TPM or less, 300 TPM or less, 290 TPM or less, 280 TPM or less, 270 TPM or less, or 260 TPM or less.

In one illustrative embodiment, the twist number of the first and second primarily-twisted yarns (i.e., the number of twists at the primary twisting) and the number of twists at the secondary twisting may be the same or different. In a specific embodiment of the present application, the number of twists at the time of primary twisting and the number of twists at the time of secondary twisting may be set to be the same. However, in some cases, the number of twists at the time of primary twisting and the number of twists at the time of secondary twisting may be slightly different in the final product. Specifically, in the case of a CC twist machine (Cable Corder Twist machine) used in the manufacture of the cord, it is driven by one motor. The yarn in the creel passes through a disc connected to the motor and is connected to a regulator (a section where the primarily twisted yarn and primarily twisted yarn meet to perform secondary twisting). The yarn at the port passes through a tension adjusting guide roll and is connected to a regulator. At this time, due to the rotation of the motor, the regulator to which the yarn coming out of the disc is connected is also rotated. As a result of such mechanical motion, the primary twisting is applied to the creel part yarn and the port part yarn connected by the rotation of the motor. The primarily twisted yarns are twisted in the regulator to perform secondary twisting. In this manner, the raw cord is manufactured while a twisting occurs due to the rotational motion of the motor. Even when the twist numbers of the primary twisting and the secondary twisting are imparted (set) to be the same, the twist numbers of the primary twisting and the secondary twisting may be slightly different due to friction generated by the winding tension or guide rollers.

As described above, the cord of the present application includes a first primarily-twisted yarn and a second primarily-twisted yarn having a predetermined number of twists, and is formed by twisting the first primarily-twisted yarn and the second primarily-twisted yarn together. At this time, the filament for forming the first primarily-twisted yarn and the filament for forming the second primarily-twisted yarn are simultaneously primarily twisted by a CC twist machine (e.g., cable corder twist machine) or a ring twister, thereby forming a first primarily-twisted yarn and a second primarily-twisted yarn. Therefore, a twisting direction (first twisting direction) of the first primarily-twisted yarn and a twisting direction (second twisting direction) of the second primarily-twisted yarn may be the same. And, when using a CC twist machine (e.g., cable corder twist machine) or a ring twister, following the primary twisting, the secondary twisting can be performed continuously at the same time as the primary twisting, wherein the twisting direction of the secondary twisting (i.e., third twisting direction) may be opposite to the first twisting direction (or second twisting direction).

In a specific embodiment of the present application, the content ratio of the first primarily-twisted yarn and the second primarily-twisted yarn can be appropriately adjusted to a level that can achieve the object of the present application. For example, based on 100 wt.% of the total weight of the first primarily-twisted yarn and the second primarily-twisted yarn contained in the cord, specifically, the raw cord, the content of the first primarily-twisted yarn may be 10 wt.% or more, 15 wt.% or more, 20 wt.% or more, 25 wt.% or more, 30 wt.% or more, 35 wt.% or more, 40 wt.% or more, 45 wt.% or more, 50 wt.% or more, 55 wt.% or more, 60 wt.% or more, 65 wt.% or more, 70 wt.% or more, 75 wt.% or more, 80 wt.% or more, 85 wt.% or more, or 90 wt.% or more. And, the upper limit thereof may be, for example, 90 wt.% or less, 85 wt.% or less, 80 wt.% or less, 75 wt.% or less, 70 wt.% or less, 65 wt.% or less, 60 wt.% or less, 55 wt.% or less, 50 wt.% or less, 45 wt.% or less, 40 wt.% or less, 35 wt.% or less, 30 wt.% or less, 25 wt.% or less, 20 wt.% or less, 15 wt.% or less, or 10 wt.% or less. The content of the second primarily-twisted yarn may be determined according to the content of the first primarily-twisted yarn described above.

In one illustrative embodiment, the cord may be a two-ply or three-ply cord. For example, the cord may have a two-ply structure in which one strand of the first primarily-twisted yarn and one strand of the second primarily-twisted yarn are secondarily twisted together. Alternatively, the cord may have a three-ply structure in which two strands of the first primarily-twisted yarn having the above-mentioned fineness and one strand of the second primarily-twisted yarns having the above-described fineness are secondarily twisted together.

According to a specific embodiment of the present application, when the first primarily-twisted yarn (primarily twisted yarn containing a para-aramid fiber) forms a plied yarn together with the second primarily-twisted yarn (primarily twisted yarn containing a dissimilar fiber), the length ratio of the first primarily-twisted yarn and the second primarily-twisted yarn (the length ($L_1$) of the first primarily-twisted yarn/the length ($L_2$) of the second primarily-twisted yarn) measured after a secondary twisting is untwisted with respect to a plied yarn (raw cord or dipped cord) may be in the range of 1.0 to 1.10 times.

The above length ratio (length ($L_1$) of the first primarily-twisted yarn/length ($L_2$) of the second primarily-twisted yarn) makes the first primarily-twisted yarn (primarily twisted yarn containing a para-aramid fiber) with a higher modulus longer, whereby the physical properties of the second primarily-twisted yarn (e.g., nylon) with a lower modulus are exhibited in the early stage of the S-S Curve Pattern, which represents the tensile properties of the cord. Such features play a role in reducing tire shape unevenness during tire manufacturing. For example, in the case of a cap ply wound in the circumferential direction of a tire, when the initial modulus of the cord is high, it may resist the pressure that expands during tire molding and thus, the function of the tread part may not be properly expressed. Therefore, the exhibition of low modulus characteristics in the early stage of the S-S Curve Pattern of the cap ply cord may be more effective in tire manufacturing. After a tire is manufactured, it must exhibit a high elastic modulus in order to prevent the belt cord from detaching during high-speed driving and maintain its ability to make contact with the ground. For this purpose, a high elastic modulus is exhibited after the elongation zone consumed in tire manufacturing, which may be more effective in terms of tire performance. Therefore, a cord manufactured by varying the lengths of a first primarily-twisted yarn and a second primarily-twisted yarn having different elastic moduli can be very effective in terms of tire manufacturing and performance.

If the length ratio of the first primarily-twisted yarn and the second primarily-twisted yarn (length ($L_1$) of the first primarily-twisted yarn/length ($L_2$) of the second primarily-twisted yarn) is less than 1.0, the first primarily-twisted yarn with high modulus becomes shorter, and aramid physical properties appear preferentially, which may have a disadvantageous effect on tire manufacturing. Further, the high initial modulus greatly reduces fatigue performance in repeated tension compression. If the length ratio of the first primarily-twisted yarn and the second primarily-twisted yarn (length ($L_1$) of the first primarily-twisted yarn/length ($L_2$) of the second primarily-twisted yarn) exceeds 1.10, the first primarily-twisted yarn and the second primarily-twisted yarn receive separate forces under cord tension, which may reduce the stiffness of the final cord.

Specifically, the lower limit of the length ratio may be, for example, 1.01 or more, 1.02 or more, 1.03 or more, 1.04 or more, or 1.05 or more, and the upper limit thereof may be, for example, 1.09 or less, 1.08 or less, 1.07 or less, 1.06 or less, or 1.05 or less.

In a specific example of this application, the control of the length ratio as described above can be achieved by adjusting the magnitude of tension applied to each of the filaments forming the first primarily-twisted yarn and the filaments forming the second primarily-twisted yarn during the primary twisting and/or secondary twisting process for manufacturing the cord. For example, when the primary twisting and secondary twisting are performed, the magnitude of the tension applied to the para-aramid fiber (forming the first primarily-twisted yarn) is made smaller than the tension applied to the dissimilar fiber forming the second primarily-twisted yarn, so that the length of the first primarily-twisted yarn can be made longer than the length of the second primarily-twisted yarn.

In one illustrative embodiment, the cord may further include a coating layer formed on the first primarily-twisted yarn and the second primarily-twisted yarn. That is, the cord may include a raw cord; and a coating layer formed on the raw cord.

The coating layer means a layer formed from a coating liquid that can exhibit a predetermined function. Such a coating layer can be formed on at least a portion of the above-mentioned primarily twisted yarn. The method of forming the coating layer is not particularly limited, and for example, the coating layer may be formed through a known dipping or jetting method.

The coating layer may be configured to impart predetermined properties to the cord or to enhance the properties of the cord. For example, the coating layer may be a layer that can impart an adhesive function to the cord, but the properties imparted or enhanced by the coating layer are not limited to the adhesive function only.

In one illustrative embodiment, the coating layer may be formed from an adhesive (composition). In one non-limiting example, the coating layer may include or be formed from a resorcinol formaldehyde latex (RFL) adhesive (composition), an epoxy adhesive (composition), or a urethane adhesive (composition). In another example, the coating layer may be formed from an adhesive that does not contain an RFL component. However, the adhesive components forming the coating layer are not limited to those described above.

Although not particularly limited, the adhesive composition may include an aqueous or non-aqueous solvent. Such adhesives allow the fiber cord to exhibit improved adhesion to other adjacent components in tire reinforcement applications.

In one illustrative embodiment, a cord on which a coating layer is formed, that is, a dipped cord, may include a coating layer (or coating component) in the range of 1 to 10 wt.% relative to the total weight thereof (100 wt.%, which is a total content including fiber components and coating components). For example, the upper limit of the content of the coating layer may be 9 wt.% or less, 8 wt.% or less, 7 wt.% or less, 6 wt.% or less, 5 wt.% or less, 4 wt.% or less, or 3 wt.% or less, and the lower limit thereof may be 2 wt.% or more, 3 wt.% or more, 4 wt.% or more, 5 wt.% or more, 6 wt.% or more, 7 wt.% or more, 8 wt.% or more, or 9 wt.% or more.

In a specific embodiment of the present application, the first primarily-twisted yarn of the cord may exhibit predetermined crystalline properties. Specifically, the coating layer may be formed by applying a predetermined tension and heat, similar to the manufacturing method described below, and during such a treatment process, the microstructure of the para-aramid fiber changes, just as the apparent crystal size of the para-aramid fiber described above becomes larger. As confirmed in the experiments described below, as the apparent crystal size of the para-aramid fiber becomes larger, the creep strain may become lower.

In one illustrative embodiment, the para-aramid fiber contained within the dipped cord may have an apparent crystal size based on 110 plane of 7.2 nm or more, 7.3 nm or more, 7.4 nm or more, 7.5 nm or more, 7.6 nm or more, 7.7 nm or more, 7.8 nm or more, 7.9 nm or more, 8.0 nm or more, 8.1 nm or more, 8.2 nm or more, 8.3 nm or more, 8.4 nm or more, 8.5 nm or more, 8.6 nm or more, 8.7 nm or more, 8.8 nm or more, 8.9 nm or more, or 9.0 nm or more. And, the upper limit thereof may be, for example, 10.0 nm or less, 9.5 nm or less, or 9.0 nm or less. The apparent crystal size based on the 110 plane of the para-aramid fiber contained in the dipped cord can be measured with respect to the inner part where the coating liquid is not applied after separating the aramid from the dipped cord, as described later.

In one illustrative embodiment, the para-aramid fiber contained within the dipped cord may have an apparent crystal size based on 200 plane of 5.5 nm or more, 5.6 nm or more, 5.7 nm or more, 5.8 nm or more, 5.9 nm or more, 6.0 nm or more, 6.2 nm or more, 6.3 nm or more, or 6.4 nm or more, and 6.5 nm or less, 6.4 nm or less, 6.3 nm or less, 6.2 nm or less, 6.1 nm or less, or 6.0 nm or less. The apparent crystal size based on the 200 plane of the para-aramid fiber contained in the dipped cord can be measured with respect to the inner part where the coating liquid is not applied after separating the aramid from the dipped cord, as described later.

In one illustrative embodiment, the para-aramid fiber contained within the dipped cord may have a crystallinity of 72% or more, 72.5% or more, 73.0% or more, 73.5% or more, 74.0% or more, 74.5% or more, 75.0% or more, 75.5% or more, 76.0% or more, 76.5% or more, 77.0% or more, 77.5% or more, 78.0% or more, 78.5% or more, 79.0% or more, or 79.5% or more, and the upper limit thereof may be, for example, 80% or less, 79.5% or less, 79.0% or less, 78.5% or less, 78.0% or less, 77.5% or less, 77.0% or less, 76.5% or less, 76.0% or less, 75.5% or less, 75% or less, 74.5% or less, 74.0% or less, 73.5% or less, 73% or less, or 72.5% or less. The crystallinity of the para-aramid fiber contained in the dipped cord can be measured with respect to the inner part where the coating liquid is not applied after separating the aramid from the dipped cord, as described later.

As described above, in the present application, a raw cord is manufactured using para-aramid fibers with relatively large crystal size and crystallinity, and a coating layer is formed by heat treatment and tension on the raw cord, so that the para-aramid fiber contained within the dipped cord also show larger values. As a result, the degree of deformation of fibers and cords can be improved, as confirmed by the creep strain described below.

In a specific embodiment of the present application, the cord with the above configuration may exhibit the following characteristics.

In one illustrative embodiment, the creep strain (%) of the cord may be 3.0% or less. Specifically, the cord may satisfy a creep strain (%) of 2.9% or less, 2.85% or less, 2.8% or less, 2.75% or less, 2.7% or less, 2.65% or less, 2.6% or less, 2.55% or less, 2.5% or less, 2.45% or less, 2.4% or less, 2.35% or less, 2.3% or less, 2.25% or less, or 2.20% or less. Although not particularly limited, the lower limit of the creep strain (%) may be, for example, 1.5% or more or 2.0% or more. Creep strain refers to the deformation of a material according to a constant load and temperature, and has a different meaning from elongation, which measures the deformation until the material breaks or cuts as the load continues to increase. In the case of elongation, it measures how far the material can stretch, and is generally a value converted to the length stretched until the material is broken or cut. On the other hand, the creep strain represents the strain under a fixed load. Therefore, a high creep strain means that the shape of the product is greatly deformed under a constant load. Therefore, if a cord with high creep strain is used, the possibility of occurrence of tire shape deformation due to long-term parking is higher.

As described later, creep strain (%) is measured by applying a load (tension) of 0.8 g/d (where d is denier and g is the unit of weight) to the cord at 80°C for 24 hours according to ASTM D2990, which may mean the length change rate of the cord (strain in the load direction) confirmed under the above conditions. According to a specific embodiment of the present application, a predetermined pretreatment can be performed on the cord before measuring the creep strain. For example, the creep strain of the cord can be measured after performing the pretreatment in which the cord is stored under constant temperature and humidity conditions (controlled conditions at 20 ± 2°C, humidity: 65 ± 5%) for 24 hours, and a load (tension) of 0.01 g/d (where d is denier and g is the unit of silver weight) is applied to the cord for 15 minutes at 180°C.

In one illustrative embodiment, the cord may have a stiffness of 24.0 kgf or more. Specifically, the stiffness of the cord may be, for example, 24.5 kgf or more, 25.0 kgf or more, 25.5 kgf or more, 26.0 kgf or more, 26.5 kgf or more, 27.0 kgf or more, 27.5 kgf or more, 28.0 kgf or more, 28.5 kgf or more, 29.0 kgf or more, 29.5 kgf or more, or 30.0 kgf or more. And, the upper limit thereof is not particularly limited, but may be, for example, 40 kgf or less, 35 kgf or less, or 30 kgf or less. The stiffness of the cord can be measured according to ASTM D885 as described below. At this time, the cord may be a dipped cord.

In one illustrative embodiment, the tenacity of the cord may be greater than 13.0 g/d. Specifically, the tenacity of the cord may be, for example, 13.5 g/d or more, 14.0 g/d or more, 14.5 g/d or more, 15.0 g/d or more, 15.5 g/d or more, 16.0 g/d or more, 16.5 g/d or more, 17.0 g/d or more, 18.0 g /d or more, 18.5 g/d or more, 19.0 g/d or more, or 19.5 g/d or more. And, the upper limit thereof is not particularly limited, but may be, for example, 25 g/d or less or 20 g/d or less. The tenacity of the cord can be measured according to ASTM D885 as described below. At this time, the cord may be a dipped cord.

In one illustrative embodiment, the elongation (breaking elongation) of the cord may be 7.0% or more. Specifically, the elongation of the cord may be, for example, 7.5% or more, 8.0% or more, 8.5% or more, 9.0% or more, 9.5% or more, or 10% or more. And, the upper limit thereof is not particularly limited, but may be, for example, 15% or less. The elongation of the cord can be measured according to ASTM D885 as described below. At this time, the cord may be a dipped cord.

In another example of the present application, this application relates to a method of manufacturing the above-mentioned cord. The above-mentioned cord can be manufactured through the above manufacturing method. Therefore, among the descriptions regarding the characteristics of the above-mentioned cord, descriptions of overlapping configurations or characteristics will be omitted from the description regarding the manufacturing method described later.

In one specific example of the present application, the method for manufacturing the cord may comprise the steps of: preparing a para-aramid fiber having a crystallinity of 67% or more, an apparent crystal size based on 110 plane of 5.8 to 7.0 nm, a total fineness of 200 to 1600 deniers, and a tenacity of 22 g/d or more; and secondarily twisting a first primarily-twisted yarn and a second primarily-twisted yarn together to prepare a cord as a plied yarn, wherein the first primarily-twisted yarn is formed by imparting twists to the para-aramid fiber, and wherein the second primarily-twisted yarn is formed by imparting twists to a dissimilar fiber that is different from the para-aramid fiber.

In the above method, the first primarily-twisted yarn can be manufactured by imparting twists of 250 to 600 TPM to the para-aramid fiber. The specific twist number of the first primarily-twisted yarn is the same as described above.

In the above method, the second primarily-twisted yarn can be manufactured by imparting twists of 250 to 600 TPM to the dissimilar fiber. The specific twist number of the second primarily-twisted yarn is the same as described above.

In the above method, the first primarily-twisted yarn and the second primarily-twisted yarn may be twisted with a twist number of 250 to 600 TPM to form a cord. The specific twist number during secondary twisting is the same as described above.

In one illustrative embodiment, the method may further include forming a coating layer on the plied yarn (raw cord). At this time, 'forming a coating layer' may mean that the coating layer-forming composition (coating liquid) is applied onto the raw cord. The applied coating layer-forming composition may be subjected to heat treatment such as drying or curing, which will be described later. In this case, the coating layer may refer to a layer obtained through heat treatment.

The method of applying the coating layer-forming composition (coating liquid) onto the raw cord is not particularly limited, and dipping or jetting methods may be used.

For example, the method may include jetting a coating layer-forming composition (coating liquid) onto plied yarn (raw cord). That is, the above method can form a coating layer by jetting a coating layer-forming composition (coating liquid) onto the plied yarn.

In another illustrative example, the method may include dipping the plied yarn (raw cord) in a coating layer-forming composition (coating liquid). That is, the above method can form a coating layer by dipping the plied yarn in a coating layer-forming composition (coating liquid). When the plied yarn is dipped into the coating layer-forming composition (coating liquid), the specific method of dipping the plied yarn in the coating layer-forming composition is not particularly limited. For example, a method may be used in which the plied yarn or a fiber substrate containing the same is dipped in a coating bath filled with a coating layer-forming composition while being transported using a roll. A cord coated with a coating layer-forming composition after dipping may be referred to as a dipped cord.

In one illustrative embodiment, formation of the coating layer may be performed while going through transport of the cord, application (jetting or dipping) of the coating layer-forming composition to the cord, and/or subsequent heat treatment. For example, the step (process) of forming a coating layer may include one or more of transport of the cord, dipping (or jetting), and heat treatment. Specifically, the step (process) of forming a coating layer may include performing heat treatment while applying a predetermined magnitude of tension to the plied yarn to which the coating layer-forming composition has already been applied; applying and heat treating the coating layer-forming composition to the plied yarn while applying a predetermined magnitude of tension; or transferring to the plied yarn, applying the coating layer-forming composition, and performing heat treatment while applying a predetermined magnitude of tension.

In a specific embodiment of the present application, the heat treatment may be performed at a predetermined temperature range. For example, the heat treatment may be performed at a temperature of 50°C or more, specifically in the range of 60 to 350°C. Although not particularly limited, the heat treatment may be performed for 10 to 300 seconds.

In one illustrative embodiment, the method may include two or more heat treatment steps. Specifically, the method may include a first heat treatment step that is performed at a temperature of 70 to 180°C; and a second heat treatment step that is performed at a temperature of 200 to 250°C. The time for which the heat treatment is performed is not particularly limited, but for example, each of such heat treatments may be performed for about 30 to 300 seconds.

In one illustrative embodiment, the temperature at which the first heat treatment is performed may be lower than the temperature at which the second heat treatment is performed. Specifically, the first heat treatment temperature may be in the range of 70 to 180 °C, and the second heat treatment temperature may be in the range of 200 to 250 °C. At this time, the first heat treatment performed at a relatively low temperature may be referred to as a drying process, and the second heat treatment performed at a relatively high temperature may be referred to as a curing process.

In one illustrative embodiment, the formation of the coating layer may be performed while applying tension to the plied yarn (raw cord).

For example, the tension applied to the plied yarn may be 0.1 kg/cord or more, 0.2 kg/cord or more, 0.3 kg/cord or more, 0.4 kg/cord or more, 0.5 kg/cord or more, 0.6 kg/cord or more, 0.7 kg/cord or more, 0.8 kg/cord or more, or 0.9 kg/cord or more. And, the upper limit thereof may be, for example, 1.5 kg/cord or less, 1.4 kg/cord or less, 1.3 kg/cord or less, 1.2 kg/cord or less, 1.1 kg/cord or less, 1.0 kg/cord or less, 0.9 kg/cord or less, 0.8 kg/cord or less, 0.7 kg/cord or less, 0.6 kg/cord or less, 0.5 kg/cord or less, 0.4 kg/cord or less, 0.3 kg/cord or less, or 0.2 kg/cord or less.

In one illustrative embodiment, when the step (process) of forming a coating layer is performed while applying tension, the step (process) of forming a coating layer can be used in a sense including heat-treating the plied yarn to which the coating layer-forming composition has already been applied while applying the above-mentioned magnitude of tension to the plied yarn. More specifically, the step (process) of forming a coating layer performed while applying the tension can be used in the sense including a process of performing a secondary heat treatment while applying the above-mentioned magnitude of tension to the plied yarn performed up to the primary heat treatment after the coating layer-forming composition is applied. Because the heat treatment in which high temperature is applied, especially the second heat treatment, greatly affects the final physical properties of the cord, it is important to satisfy the above-mentioned tension range. Therefore, the tension in the range mentioned above can be maintained at least during the heat treatment, more specifically during the secondary heat treatment. In addition, the transfer and dipping (jetting) for forming the coating layer, and the primary heat treatment process may be the same or different (slightly changed).

When heat and tension are applied as mentioned above, the tension causes the molecular chains to become a little more oriented in the direction of the fiber axis, and such an orientation is set by heat, so that microstructure may change. Because heat and/or tension are applied during the dipping process, the microstructure of the para-aramid fiber in the dipped cord has a larger crystal size compared to the yarn state. As described above, in the present application, the para-aramid yarn with a higher crystallinity is used, and in addition, the crystallinity of the dipped cord para-aramid fiber increases due to the dipping treatment, so that the degree of deformation against external force can be lowered (i.e., deformation resistance increases). This is confirmed by the creep strain (%) described above.

In one illustrative embodiment, the dipping or jetting may be performed one or more times. If dipping or jetting is performed two times or more, the components of the coating layer-forming composition used for each dipping or jetting may be the same or different.

For example, primary dipping, secondary dipping, and heat treatment may be performed sequentially. At this time, the heat treatment may sequentially include a primary heat treatment (e.g., drying) and/or a secondary heat treatment (e.g., curing).

In another illustrative example, the primary dipping, heat treatment, secondary dipping, and heat treatment may be sequentially performed. In this case, the heat treatment performed between the primary dipping and the secondary dipping may be a drying process performed at a relatively low temperature, and the heat treatment performed after the secondary dipping may be a curing process performed at a relatively high temperature.

In one illustrative embodiment, the method may be a method in which para-aramid fibers (filaments) are primarily twisted in a first twisting direction to produce a first primarily-twisted yarn, and at the same time, dissimilar fibers (filaments) are primarily twisted in a second twisting direction to produce a second primarily-twisted yarn.

In one illustrative embodiment, the method may be a method of producing a plied yarn by secondarily twisting the first and second primarily-twisted yarns in a third twisting direction after or simultaneously with the production of the primarily-twisted yarn as described above. In this case, the first twisting direction and the second twisting direction may be the same, and the first twisting direction and the third twisting direction may be different from each other.

According to a specific embodiment of the present application, a twisting machine that simultaneously performs primary twisting and secondary twisting, such as a cable corder, may be used in the production of a plied twisted yarn. For example, in the case of manufacturing a hybrid cord, since the first primarily-twisted yarn forming filament (para-aramid filament yarn) and the second primarily-twisted yarn forming filament (e.g., nylon, polyester, etc.) are simultaneously secondarily twisted by one twisting machine (e.g., cable corder), respectively, and also the first primarily-twisted yarn and the second primarily-twisted yarn is formed, so that a twisting direction (first twisting direction) of the first primarily-twisted yarn may be the same as a twisting direction (second twisting direction) of the second primarily-twisted yarn. **In** addition, according to a specific embodiment of the present application performed using a twisting machine such as a cable corder that can perform primary twisting and secondary twisting at the same time, following the primary twisting, the secondary twisting can be continuously performed at the same time as the primary twisting. The twisting direction (i.e., the third twisting direction) of the primary twisting may be opposite to the first twisting direction (or second twisting direction).

In one illustrative embodiment, the method may be a method of forming the primarily twisted yarn by imparting a twist number within the range of 250 to 600 TPM to the fibers (filaments) forming the primarily twisted yarn. That is, the number of twists imparted to the first and second primarily-twisted yarns is in the range of 250 to 600 TPM.

In one illustrative embodiment, the method may include secondarily twisting the first primarily-twisted yarn and the second primarily-twisted yarn with a twist number within a range of 250 to 600 TPM to form a plied twisted yarn.

In a specific embodiment of the present application, the method may be a method of controlling the magnitude of the tension applied to the aramid fiber (forming a first primarily-twisted yarn) to be smaller than the tension applied to the dissimilar fiber (forming a second primarily- twisted yarn) when the primary twisting and/or secondary twisting are performed. Through this, the length ratio of the first primarily-twisted yarn and the second primarily-twisted yarn (the length ($L_1$) of the first primarily-twisted yarn/the length ($L_2$) of the second primarily-twisted yarn) measured after the secondary twisting is untwisted with respect to the plied twisted yarn (raw cord or dipped cord) can be adjusted in the range of 1.0 to 1.10 times.

In relation to the preparation method of the present application, in addition to the above description, the description regarding the configuration, characteristics, and preparation of the cord and the primarily twisted yarn forming the same are the same as those described above, and thus will be omitted.

In a specific embodiment of the present application, the method for manufacturing the cord may further include a method of producing (preparing) the above-mentioned para-aramid fiber. For example, the para-aramid fiber can be produced through the method described above, and the method for manufacturing the cord may further comprise a step of filtering a reaction raw material to remove impurities; a step of adding aromatic diamine to a mixed solvent containing an organic solvent and an inorganic salt to form a slurry; a step of adding aromatic diacid halide to a reactor containing the slurry in three or more times and reacting the mixture to form a para-aramid polymer; and a step of spinning a spinning dope containing the para-aramid polymer to produce a fiber. At this time, in the step of forming the polymer, difference between the cooling water temperature at a cooling water inlet side and the temperature at a cooling water outlet side for cooling the reactor during primary and secondary addition of the aromatic diacid halide may be controlled to be within 50°C.

Since the specific process for manufacturing para-aramid fibers is the same as described above, a description thereof is omitted.

In another example related to the present application, this application relates to a rubber composite or a rubber reinforcing material including the cord. The rubber composite or the rubber reinforcing material may further include a rubber substrate such as a rubber sheet in addition to the above-mentioned cord.

In another example of the present application, this application relates to a tire comprising the cord. The tire may have commonly known configurations such as treads, shoulders, sidewalls, cap plies, belts, carcasses (or body plies), inner liners, beads, and the like.

**[Advantageous Effects]**

According to the present application, a cord comprising, as a primarily-twisted yarn component, a para-aramid fiber having large crystal size and high crystallinity and thus exhibiting excellent mechanical properties (e.g. tensile properties) is provided. The cord has high resistance to deformation due to an external force and can be used as a tire reinforcing material.

**[DETAILED DESCRIPTION OF THE EMBODIMENTS]**

Hereinafter, the actions and effects of the invention will be described more specifically with reference to specific examples of the present disclosure. However, the examples are for illustrative purposes only, and are not intended to limit the scope of rights of the invention in any sense.

**Experiment** 1: **Evaluation of para-aramid polymers and fibers**

**1. Preparation of para-aramid polymer and evaluation of physical properties**

The physical properties of the para-aramid polymer obtained in Synthesis Example below were measured according to the methods described below.

(1) Measurement of intrinsic viscosity

The intrinsic viscosity of the polymer was measured according to Equation 1 below.

$$[\text{Equation 1}]$$

$$\text{I.V.} = \ln(\eta_{rel})/C$$

in Equation 1, ln is a natural logarithmic function, C is the concentration of the polymer solution (a solution wherein 0.5 g of the polymer is dissolved in 100 mL of 98 wt.% concentrated sulfuric acid), and the relative viscosity ($\eta_{rel}$) is the ratio of a flowing time between the polymer solution and the solvent as measured by a capillary viscometer at 30°C.

(2) Measurement of intrinsic viscosity deviation

The washed and dried polymers were divided into a group of 2 mm or more, a group of 1 mm or more and less than 2 mm, and a group of less than 1 mm using a standard sieve having mesh sizes of 1 mm and 2 mm, respectively.

Then, the intrinsic viscosity of each group was measured, and then the difference between the maximum and minimum values of the average intrinsic viscosities of the three groups was calculated to obtain the intrinsic viscosity deviation of the polymer.

(3) Content of inorganic impurities

The content of inorganic impurities in the para-aramid polymer was measured by the following method. 1g of a sample was completely decomposed by acid treatment, and then the concentration of inorganic impurities ionized and remaining in the sample was measured using an inductively coupled plasma spectrophotometer.

Synthesis Example 1: Preparation of para-aramid polymer (PPTA-1)

N-methyl-2-pyrrolidone (NMP), $CaCl_2$, p-phenylenediamine (PPD) and terephthaloyl chloride (TPC) as reaction raw materials were passed through a filter with a diameter of 0.1 $\mu$m to remove impurities in the reaction raw materials.

A mixed solvent in which NMP as an organic solvent and $CaCl_2$ as an inorganic salt was mixed in a weight ratio of 92:8 was put into a reactor under a nitrogen atmosphere, and PPD was added thereto so that the concentration of PPD in the slurry was 5 wt.% to prepare a slurry.

Then, TPC corresponding to 30 mol% of the number of moles of PPD was added to a reactor cooled to 30°C, and then reacted for 10 minutes. At this time, the stirring speed of the reactor was adjusted to about 200 rpm, so that the cooling water temperature difference between the cooling water inlet and the cooling water outlet was controlled to be 20°C.

Subsequently, TPC corresponding to 60 mol% of the number of moles of PPD was added to a reactor cooled to 30°C, and then reacted for 30 minutes. At this time, the stirring speed of the reactor was adjusted to about 200 rpm, so that the temperature difference between a cooling water inlet and a cooling water outlet was controlled to be about 20°C.

Finally, TPC corresponding to 10 mol% of the number of moles of PPD was added to a reactor cooled to 30°C, and then reacted for 30 minutes to prepare a para-aramid polymer.

Water and NaOH were added to the solution containing the para-aramid polymer to neutralize the acid. Then, after pulverizing the para-aramid polymer, the polymerization solvent contained in the para-aramid polymer was extracted with water, followed by dehydration and drying to finally obtain PPTA-1.

The intrinsic viscosity of PPTA-1 thus produced was 5.4 dl/g, and the content of inorganic impurities in the polymer was 48 ppb. In addition, using a standard sieve with mesh sizes of 1 mm and 2 mm, respectively, they were classified into a group of 2 mm or more, a group of 1 mm or more and less than 2 mm, and a group of less than 1 mm, and the intrinsic viscosity of each group was measured. Then, the intrinsic viscosity deviation calculated as the difference between the maximum and minimum values of average intrinsic viscosity was 0.85 dl/g.

Synthesis Example 2: Preparation of para-aramid polymer (PPTA-2)

A mixed solvent in which NMP as an organic solvent and $CaCl_2$ as an inorganic salt was mixed in a weight ratio of 86:14 was put into a reactor under a nitrogen atmosphere, and PPD was added thereto so that the concentration of PPD in the slurry was 3 wt.% to prepare a slurry.

Then, TPC corresponding to 30 mol% of the number of moles of PPD was added to a reactor cooled to 0°C, and then reacted at 5°C for 30 minutes.

After 30 minutes, the difference between the cooling water temperature at a cooling water inlet side and the temperature at cooling water outlet side was 65°C, and TPC corresponding to 60 mol% of the number of moles of PPD was added to the reactor, and then reacted at 5°C for 20 minutes. TPC corresponding to 10 mol% of the number of moles of PPD was added to the reactor, and then reacted at 5°C for 5 minutes to prepare a para-aramid polymer.

Water and NaOH were added to the solution containing the para-aramid polymer to neutralize the acid. Then, after pulverizing the para-aramid polymer, the polymerization solvent contained in the para-aramid polymer was extracted with water, followed by dehydration and drying to finally obtain PPTA-2.

The intrinsic viscosity of PPTA-2 thus prepared was 5.4 dl/g, and the content of inorganic impurities in the polymer was 3150 ppb. In addition, using a standard sieve with a mesh size of 1 mm and 2 mm, respectively, they were classified into a group of 2 mm or more, a group of 1 mm or more and less than 2 mm, and a group of less than 1 mm, and the intrinsic viscosity of each group was measured. Then, the intrinsic viscosity deviation calculated as the difference between the maximum and minimum values of average intrinsic viscosity was 1.3 dl/g.

## 2. Production of para-aramid fiber and evaluation of physical properties

The physical properties of the para-aramid fibers obtained in Preparation Examples and Comparative Preparation Example below were measured according to the methods described below, and the results are shown in Table 1 below.

(1) Fineness (denier, de)

Fineness is the denier (de) expressed in weight (g) of 9000 m yarn, which is measured according to ASTM D 1577.

(2) Tensile properties

The para-aramid fibers produced in Preparation Examples and Comparative Preparation Example were cut into a length of 250 mm to prepare a sample twisted with TM (twist multiplier) of 1.1, and the sample was stored for 14 hours at a relative humidity of 55% and a temperature of 23°C.

Then, according to the ASTM D885-Standard Test Method, the sample was mounted on INSTRON's tester (Instron Engineering Corp, Canton, Mass), one side of the fiber was fixed, and the initial load was set to 1/30 g of the fineness (fineness X 1 / 30 g), and then the other side was stretched at a speed of 25 mm/min, and the tensile load (g) and elongation (strain) when the fiber was broken were measured. The tenacity (g/d) was obtained by dividing the measured tensile load by the fineness, and the Young's modulus was obtained from the slope of the stress-strain curve of the para-aramid fiber obtained under the above tensile load measurement conditions.

(3) X-ray diffraction (XRD) analysis

The microstructure of the para-aramid fibers produced in Preparation Examples and Comparative Preparation Example was analyzed through X-ray diffraction patterns.

The para-aramid fibers produced in Examples and Comparative Examples were cut into a length of 20 to 30 mm, aligned as much as possible, and then attached to a holder to prepare samples. The prepared samples were hung on the sample attachment, and the β-position was set to 0°. After warming-up, the voltage and current of the XRD measuring device were gradually raised to the measurement conditions of 50 kV and 180 mA, and the equatorial pattern was measured. In addition, the main measurement conditions were set as follows.

Goniometer, continuous scan mode, scan angle range: 10 to 40°, Scan speed: 2.

The 2θ positions of two peaks appearing between 20 to 21° and 22 to 23° in the scanned profile were measured. The measured profile was processed with a multi peak separation method program.

After a background was assigned linearly from 15° to 35° at the 2θ, two crystal peaks were separated to obtain an X-ray diffraction pattern.

i) Apparent crystal size (ACS)

Using the X-ray diffraction pattern and a factor [2θ Position, Intensity Full Width at Half Maximum (FWHM)], the apparent crystal size (ACS) was obtained when K of each crystal plane was 1 by the Scherrer Equation. Here, the apparent crystal size (ACS) means the average size of the corresponding crystal plane.

ii) Crystallinity (Xc)

The crystallinity was obtained through the ratio between the crystalline peak and the amorphous peak using the X-ray diffraction pattern.

iii) Orientation angle (OA)

After performing azimuthal scan at the position of each side of the X-ray diffraction pattern, the full width at half maximum (FWHM) of each peak was determined to obtain the orientation angle.

iv) Paracrystalline parameter ($g_{II}$)

The para-aramid fibers prepared in Preparation Examples and Comparative Preparation Example were cut into a length of 20 to 30 mm, aligned as much as possible, and then attached to a holder to prepare samples. The prepared samples were hung on the sample attachment and the β-position was set to 0°. After warming-up, the voltage and current of the XRD measuring device were gradually raised to the measurement conditions of 50 kV and 180 mA, and the meridional pattern was measured. In addition, the main measurement conditions were set as follows.

Goniometer, continuous scan mode, scan angle range: 10° to 40°, scan speed: 0.5 [The step/scan time gives enough beam exposure time to get 2,000 CPS because the intensity of the peak is insignificant].

The 2θ position of the peak (002 plane) appearing between 10 and 15° in the scanned profile was measured. The paracrystalline parameter was derived by substituting the measured profile into the HOSEMANN equation of Equation 2 below.

[Equation 2]

$$(\delta_S)^2_0 = (\delta_S)^2_c + (\delta_S)^2_{II} = \frac{1}{L^2_{wd}} + \frac{(\pi g_{II})^4 m^4}{d^2_{wd}}$$

in Equation 2, δs is the dispersity of the diffraction peak, L is the apparent crystal size, d is the spacing of the lattice plane, and m is the order of the diffraction peak.

Preparation Example 1: Production of para-aramid fiber

A spinning dope was prepared by dissolving PPTA-1 obtained in Synthesis Example 1 in 99.8 wt.% sulfuric acid in an amount of 19 wt.% based on the total weight of the spinning dope.

The spinning dope was spun at a speed of 650 m/min through a spinneret having 133 holes, and coagulated in a coagulation tank through an air gap to produce filaments.

The coagulated filaments were washed with water to remove sulfuric acid or the like remaining on the filaments, dried, and then wound to obtain para-aramid fibers having a monofilament fineness of 1.43 de and a total fineness of 213 de.

Preparation Example 2: Production of para-aramid fiber

A spinning dope was prepared by dissolving PPTA-1 obtained in Synthesis Example 1 in 99.8 wt.% sulfuric acid in an amount of 19 wt.% based on the total weight of the spinning dope.

The spinning dope was spun at a speed of 620 m/min through a spinneret having 665 holes, and coagulated in a coagulation tank through an air gap to produce filaments.

The coagulated filaments were washed with water to remove sulfuric acid or the like remaining on the filaments, dried, and then wound to obtain para-aramid fibers having a monofilament fineness of 1.43 de and a total fineness of 988 de.

Preparation Example 3: Production of para-aramid fiber

A spinning dope was prepared by dissolving PPTA-1 obtained in Synthesis Example 1 in 99.8 wt.% sulfuric acid in an amount of 20 wt.% based on the total weight of the spinning dope.

The spinning dope was spun at a speed of 600 m/min through a spinneret having 665 holes, and coagulated in a coagulation tank through an air gap to produce filaments.

The coagulated filaments were washed with water to remove sulfuric acid or the like remaining on the filaments, dried, and then wound to obtain para-aramid fibers having a monofilament fineness of 1.50 de and a total fineness of 1022 de.

Preparation Example 4: Production of para-aramid fiber

A spinning dope was prepared by dissolving PPTA-1 obtained in Synthesis Example 1 in 99.8 wt.% sulfuric acid in an amount of 19 wt.% based on the total weight of the spinning dope.

The spinning dope was spun at a speed of 650 m/min through a spinneret having 1000 holes, and coagulated in a coagulation tank through an air gap to produce filaments.

The coagulated filaments were washed with water to remove sulfuric acid or the like remaining on the filaments, dried, and then wound to obtain para-aramid fibers having a monofilament fineness of 1.54 de and a total fineness of 1550 de.

Comparative Preparation Example 1: Production of para-aramid fiber

A spinning dope was prepared by dissolving PPTA-2 obtained in Synthesis Example 2 in 99.8 wt.% sulfuric acid in an amount of 19 wt.% based on the total weight of the spinning dope.

The spinning dope was spun at a speed of 600 m/min through a spinneret having 1000 holes, and coagulated in a coagulation tank through an air gap to produce filaments.

The coagulated filaments were washed with water to remove sulfuric acid or the like remaining on the filaments, dried, and then wound to obtain para-aramid fibers having a monofilament fineness of 1.49 de and a total fineness of 1527 de.

For reference, when the spinning speed of PPTA-2 obtained in Synthesis Example 2 was set to be the same as in Preparation Example 4, various physical properties are inferior, so it was produced to have the same level of fineness as the para-aramid fiber of Preparation Example 4, but the spinning speed was adjusted at a rate optimized for PPTA-2 obtained in Synthesis Example 2.

[Table 1]

| Item | Characteristics | Preparation Example 1 | Preparation Example 2 | Preparation Example 3 | Preparation Example 4 | Comparative Preparation Example 1 |
|---|---|---|---|---|---|---|
| Tensile properties | Tenacity (g/d) | 23.2 | 22.7 | 27.4 | 23.9 | 22.3 |
| | Young's modulus (g/d) | 798 | 767 | 820 | 751 | 742 |
| | Elongation (%) | 3.02 | 3.17 | 3.44 | 3.49 | 3.32 |

(continued)

| Item | Characteristics | Preparation Example 1 | Preparation Example 2 | Preparation Example 3 | Preparation Example 4 | Comparative Preparation Example 1 |
|------|-----------------|----------------------|----------------------|----------------------|----------------------|-----------------------------------|
| XRD* | Crystal size (nm) | 5.9 (110) 5.7 (200) | 5.8 (110) 5.5 (200) | 6.4 (110) 5.8 (200) | 6.0 (110) 5.7 (200) | 5.7 (110) 5.5 (200) |
| | Crystallinity (%) | 72.3 | 68.5 | 72.8 | 69.5 | 68.3 |
| | Orientation angle (°) | 8.6 (110) 9.8 (200) | 10.2 (110) 11.4 (200) | 9.0 (110) 10.2 (200) | 9.9 (110) 11.1 (200) | 12.1 (110) 13.4 (200) |
| | Paracrystalline parameter (%) | 1.66 | 1.82 | 1.55 | 1.49 | 1.52 |

* The apparent crystal size in Table 1 means the apparent crystal size based on 110 plane and the apparent crystal size based on 200 plane, and the orientation angle means an orientation angle based on 110 plane and an orientation angle based on 200 plane.

Referring to Table 1, it is confirmed that the para-aramid fiber according to one embodiment is formed from a para-aramid polymer prepared by controlling the addition condition and addition method of the reaction raw material using the reaction raw material from which impurities are removed, and thus, can be provided in various grades of high-quality para-aramid fibers.

Specifically, comparing Preparation Examples 1, 2 and 4 with Comparative Preparation Example 1, which provide standard tenacity aramid fibers having a tenacity of about 20 to 24 g/d, it is confirmed that Preparation Examples 1, 2 and 4 show a larger crystal size, higher crystallinity and higher orientation compared to Comparative Preparation Example 1, and further shows more excellent Young's modulus.

In addition, Preparation Example 3, which provides a high tenacity aramid fiber having a tenacity of 25 g/d or more, also shows a large crystal size, high crystallinity and high orientation, confirming excellent tensile properties.

## Experiment 2: Manufacture of cord and evaluation of physical properties

Para-aramid filament yarn was produced through the same procedure as in Preparation Examples and Comparative Preparation Example described in Experiment 1, with the proviso that the total fineness was controlled to a similar level of 1000 ($\pm$ 50 or less) denier. Each of the produced para-aramid filament yarns and the nylon filament yarn with 840 deniers were put into a Cable Corder (Allma), and primary twisting in Z-direction and secondary twisting in S-direction were respectively performed at the same time to prepare a 2-ply cabled yarn (raw cord). At this time, for the primary twisting and secondary twisting, the Cable Corder was set to a twist number of 360 TPM (twist per meter), and the tension applied to each of the nylon filament yarn and the para-aramid filament yarn was adjusted, so that the ratio of the length of the para-aramid single yarn (primarily twisted yarn) to the length of the nylon single yarn (primarily twisted yarn) in the plied yarn (raw cord) (= para-aramid single yarn length ($L_A$) / Nylon single yarn length ($L_N$) ) was set to 1.01. At this time, to determine the length ratio of the para-aramid single yarn and the Nylon single yarn, a 0.05 g/d load was applied to a 1 m long plied yarn (raw cord) sample to loosen the twist, the para-aramid single yarn and Nylon single yarn were separated from each other, and then the length of the para-aramid single yarn and the length of the Nylon single yarn were respectively measured under a load of 0.05 g/d. The raw cord prepared as above contains about 40 to 50 wt.% of the first primarily-twisted yarn (including para-aramid single yarn) and about 50 to 60 wt.% of the second primarily-twisted yarn (including nylon fiber).

Then, the plied yarn (raw cord) was dipped into a resorcinol-formaldehyde-latex (RFL) adhesive solution containing 2.0 wt.% resorcinol, 3.2 wt.% formalin (37%), 1.1 wt.% sodium hydroxide (10%), 43.9 wt.% styrene/butadiene/vinylpyridine (15/70/15) rubber (41%) and water. The plied yarn (raw cord) containing the RFL solution by dipping was dried at 150°C for 100 seconds, and heat treated (cured) at 240°C for 100 seconds, thereby completing the dipped cord. The tension applied to the plied twisted yarn during the dipping, drying, and heat treatment processes was 0.6 kg/cord. At this time, the content of the coated adhesive was about 4.5 to 5.0 wt.% based on 100 wt.% of the total weight of the produced dipped cord.

The characteristics of the following items were measured for the dipped cord produced as described above, and the results are listed in Table 2 below.

(1) Apparent crystal size and crystallinity based on 110 and 200 plane of para-aramid primarily-twisted yarn contained in the dipped cord

The para-aramid primarily-twisted yarn was separated from the dipped cord, and the crystal properties of the para-aramid primarily-twisted yarn were measured in the same manner as in the measurement of yarn microstructure described in Experiment 1 with respect to the inner part where the coating liquid was not applied.

(2) Creep Strain (%) of dipped cord

According to ASTM D885, the dipped cord sample was left for 24 hours under conditions of constant temperature and humidity (conditions controlled at temperature: 20 ± 2°C and humidity: 65 ± 5% according to ASTM D885), and then the cord was pretreated (dried) at a temperature of 180°C and a load of 0.01 g/d for 15 minutes. Because the dissimilar fiber components (e.g., nylon) may be deformed by moisture, the same pretreatment as above was performed in order to reproducibly measure the creep strain (%).

After going through the above procedure, the creep evaluation of the hybrid dipped cord was performed using the method according to ASTM D2990, and creep strain (%) over time was measured. Specifically, while applying a load of 0.8 g/d to the cord at 80°C for 24 hours, the strain rate (deformation rate) in the direction in which the load was applied (longitudinal direction) was measured. (Creep Strain (%) after 24 hours).

(3) Stiffness (kgf), tenacity (breaking strength) (g/d) and elongation (breaking elongation) (%) of the dipped cord

Ten samples with a length of 500 mm were prepared for each dipped cord. Then, according to the ASTM D885 and ASTM D885M-10a (2014)-Test Method, a tensile speed of 300 m/min was applied to each sample using an Instron testing machine (Instron Engineering Corp., Canton, Mass) and thereby, the stiffness, tenacity and breaking elongation of each sample were measured respectively. Then, the arithmetic mean values of the stiffness, tenacity, and breaking elongation of the 10 samples were calculated, respectively.

[Table 2]

| Item | Characteristic | Example 1 | Example 2 | Example 3 | Example 4 | Comparative Example 1 |
|---|---|---|---|---|---|---|
| Kind and characteristic of para-aramid yarn | Preparation method/denier | Same method as Preparation Example 1 / about 1000 denier | Same method as Preparation Example 2 / about 1000 denier | Same method as Preparation Example 3 / about 1000 denier | Same method as Preparation Example 4 / about 1000 denier | Same method as Comparative Preparation Example 1 / about 1000 denier |
| | Tenacity (g/d) | 23.2 | 22.7 | 27.4 | 23.9 | 22.3 |
| | Young's modulus (g/d) | 798 | 767 | 820 | 751 | 742 |
| | Elongation(%) | 3.02 | 3.17 | 3.44 | 3.49 | 3.32 |
| | Apparent crystal size based on 110 plane (nm) | 5.9 | 5.8 | 6.4 | 6.0 | 5.7 |
| | Apparent crystal size based on 200 plane (nm) | 5.7 | 5.5 | 5.8 | 5.7 | 5.5 |
| | Crystallinity (%) | 72.3 | 68.5 | 72.8 | 69.58 | 68.3 |

(continued)

| Item | Characteristic | Example 1 | Example 2 | Example 3 | Example 4 | Comparative Example 1 |
|---|---|---|---|---|---|---|
| Characteristic of dipped cord | Aramid crystal size based on 110 plane (nm) | 7.3 | 7.2 | 8.9 | 8.2 | 7.1 |
| | Aramid crystal size based on 200 plane (nm) | 5.7 | 5.5 | 5.9 | 5.8 | 5.6 |
| | Crystallinity (%) | 75.8 | 72.2 | 76.6 | 73.4 | 71.8 |
| | Creep strain (%) | 2.53 | 2.51 | 2.33 | 2.74 | 3.05 |
| | Stiffness (kgf) | 24.9 | 24.5 | 29.4 | 25.6 | 24.3 |
| | Tenacity (g/d) | 13.5 | 13.3 | 16.0 | 13.9 | 13.2 |
| | Elongation (%) | 7.8 | 7.5 | 8.1 | 7.9 | 7.7 |

Referring to Table 2, it is confirmed that the cords of Examples 1 to 4 comprising para-aramid fibers having large apparent crystal size and high crystallinity and thus exhibiting excellent mechanical properties have a lower creep strain than Comparative Example 1 and have high deformation resistance against external force.

## Claims

1. A cord formed by plying a first primarily-twisted yarn and a second primarily-twisted yarn, wherein the first primarily-twisted yarn is formed by imparting twists to a para-aramid fiber having a crystallinity of 67% or more, an apparent crystal size based on 110 plane of 5.8 to 7.0 nm, a total fineness of 200 to 1600 deniers, and a tenacity of 22 g/d or more, and wherein the second primarily-twisted yarn is formed by imparting twists to a dissimilar fiber that is different from the para-aramid fiber.

2. The cord according to claim 1, wherein the dissimilar fiber comprises a nylon fiber or a polyester fiber.

3. The cord according to claim 1, further comprising a coating layer formed on the first primarily-twisted yarn and the second primarily-twisted yarn.

4. The cord according to claim 3, wherein the cord satisfies a creep strain within 3.0%.

5. The cord according to claim 1, wherein:

   the first primarily-twisted yarn is a primarily-twisted yarn in which twists of 250 to 600 TPM are imparted to the para-aramid fiber, and
   the second primarily-twisted yarn is a primarily-twisted yarn in which twists of 250 to 600 TPM are imparted to the dissimilar fiber.

6. The cord according to claim 1, wherein the cord is formed by secondarily twisting the first primarily-twisted yarn and the second primarily-twisted yarn with a twist number of 250 to 600 TPM.

7. A method for manufacturing a cord, comprising the steps of:

   preparing a para-aramid fiber having a crystallinity of 67% or more, an apparent crystal size based on 110 plane of 5.8 to 7.0 nm, a total fineness of 200 to 1600 deniers, and a tenacity of 22 g/d or more; and
   secondarily twisting a first primarily-twisted yarn and a second primarily-twisted yarn together to prepare the cord as a plied yarn, wherein the first primarily-twisted yarn is formed by imparting twists to the para-aramid fiber, and wherein the second primarily-twisted yarn is formed by imparting twists to a dissimilar fiber that is different from the para-aramid fiber.

8. The method for manufacturing the cord according to claim 7, wherein the dissimilar fiber comprises a nylon fiber or a polyester fiber.

9. The method for manufacturing the cord according to claim 7, further comprising forming a coating layer onto the plied yarn.

10. The method for manufacturing the cord according to claim 9, wherein the cord satisfies a creep strain within 3.0%.

11. The method for manufacturing the cord according to claim 7, wherein:

the first primarily-twisted yarn is produced by imparting twists of 250 to 600 TPM to the para-aramid fiber, and the second primarily-twisted yarn is produced by imparting twists of 250 to 600 TPM to the dissimilar fiber.

12. The method for manufacturing the cord according to claim 7, wherein the first primarily-twisted yarn and the second primarily-twisted yarn are secondarily twisted with a twist number of 250 to 600 TPM to form the cord.

13. The method for manufacturing the cord according to claim 7, wherein the preparing the para-aramid fiber comprises:

filtering a reaction raw material to remove impurities; adding aromatic diamine to a mixed solvent containing an organic solvent and an inorganic salt to form a slurry; adding aromatic diacid halide to a reactor containing the slurry in three or more times and reacting mixture to form a para-aramid polymer; and spinning a spinning dope containing the para-aramid polymer to produce a fiber, wherein in the forming the para-aramid polymer, the difference between the cooling water temperature at a cooling water inlet side and the temperature at a cooling water outlet side for cooling the reactor during primary and secondary addition of the aromatic diacid halide is controlled to be within 50°C.

14. The method for manufacturing the cord according to claim 13, wherein the filtering the reaction raw material to remove impurities comprises filtering the reaction raw material using a filter having a diameter of 0.01 to 1.0 $\mu$m.

15. The method for manufacturing the cord according to claim 13, wherein the stirring speed of the reactor during the secondary addition of the aromatic diacid halide is adjusted to 10 to 1000 rpm.

# INTERNATIONAL SEARCH REPORT

| International application No. |
| --- |
| **PCT/KR2023/012852** |

**A.    CLASSIFICATION OF SUBJECT MATTER**

**D02G 3/48**(2006.01)i; **D02G 3/28**(2006.01)i; **D02G 3/04**(2006.01)i; **D02G 3/36**(2006.01)i; **D01F 6/80**(2006.01)i; **D01D 1/10**(2006.01)i; **D01D 1/06**(2006.01)i; **D01D 5/06**(2006.01)i; **B60C 9/00**(2006.01)i

According to International Patent Classification (IPC) or to both national classification and IPC

**B.    FIELDS SEARCHED**

Minimum documentation searched (classification system followed by classification symbols)

D02G 3/48(2006.01); B60C 9/00(2006.01); D01D 10/02(2006.01); D01F 1/10(2006.01); D01F 6/60(2006.01); D01F 6/74(2006.01); D02G 3/04(2006.01); D03D 11/00(2006.01); D03D 15/00(2006.01); D03D 15/02(2006.01); E02D 29/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 코드(cord), 파라계 아라미드 하연사(para-aramid lower yarn), 나일론 하연사 (nylon lower yarn), 결정화도(crystallinity), 결정 크기(crystal size), 섬도(denier), 인장 강도(tensile strength)

**C.    DOCUMENTS CONSIDERED TO BE RELEVANT**

| Category* | Citation of document, with indication, where appropriate, of the relevant passages | Relevant to claim No. |
| --- | --- | --- |
| Y | KR 10-2014-0090307 A (KOLON INDUSTRIES, INC.) 17 July 2014 (2014-07-17)<br>    See paragraphs [0015], [0023], [0037], [0041]-[0047], [0058]-[0060] and [0067]. | 1-15 |
| Y | KR 10-2010-0086996 A (E.I. DU PONT DE NEMOURS AND COMPANY) 02 August 2010 (2010-08-02)<br>    See paragraphs [0022]-[0026], [0074] and [0092]; and claim 9. | 1-15 |
| Y | KR 10-0924910 B1 (KOLON CORPORATION) 03 November 2009 (2009-11-03)<br>    See paragraphs [0016]-[0020], [0026]-[0032], [0043] and [0047]. | 13-15 |
| A | KR 10-2021-0105514 A (HYOSUNG ADVANCED MATERIALS CORPORATION) 27 August 2021 (2021-08-27)<br>    See entire document. | 1-15 |

☑ Further documents are listed in the continuation of Box C.　　☑ See patent family annex.

| | |
| --- | --- |
| *　　Special categories of cited documents:<br>"A"　document defining the general state of the art which is not considered to be of particular relevance<br>"D"　document cited by the applicant in the international application<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
| --- | --- |
| **28 November 2023** | **29 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/012852** |

## C. DOCUMENTS CONSIDERED TO BE RELEVANT

| Category* | Citation of document, with indication, where appropriate, of the relevant passages | Relevant to claim No. |
| --- | --- | --- |
| A | KR 10-2009-0073566 A (SAMYANG CORPORATION) 03 July 2009 (2009-07-03)<br>See entire document. | 1-15 |
| A | CN 101768809 A (NINGBO INSTITUTE OF MATERIAL TECHNOLOGY AND ENGINEERING, CHINESE ACADEMY OF SCIENCES) 07 July 2010 (2010-07-07)<br>See entire document. | 1-15 |

Form PCT/ISA/210 (second sheet) (July 2022)

**INTERNATIONAL SEARCH REPORT**
**Information on patent family members**

International application No.

**PCT/KR2023/012852**

| Patent document cited in search report | | | Publication date (day/month/year) | Patent family member(s) | | | Publication date (day/month/year) |
|---|---|---|---|---|---|---|---|
| KR | 10-2014-0090307 | A | 17 July 2014 | CN | 104919099 | A | 16 September 2015 |
| | | | | EP | 2938765 | A1 | 04 November 2015 |
| | | | | JP | 2016-506453 | A | 03 March 2016 |
| | | | | JP | 2018-071036 | A | 10 May 2018 |
| | | | | JP | 6704730 | B2 | 03 June 2020 |
| | | | | KR | 10-1580352 | B1 | 23 December 2015 |
| | | | | US | 2015-0292124 | A1 | 15 October 2015 |
| | | | | US | 9789731 | B2 | 17 October 2017 |
| | | | | WO | 2014-104680 | A1 | 03 July 2014 |
| KR | 10-2010-0086996 | A | 02 August 2010 | CN | 101821438 | A | 01 September 2010 |
| | | | | CN | 101821438 | B | 27 March 2013 |
| | | | | EP | 2198078 | A2 | 23 June 2010 |
| | | | | JP | 2011-500977 | A | 06 January 2011 |
| | | | | JP | 5216094 | B2 | 19 June 2013 |
| | | | | KR | 10-1530735 | B1 | 22 June 2015 |
| | | | | US | 2009-0092830 | A1 | 09 April 2009 |
| | | | | US | 7976943 | B2 | 12 July 2011 |
| | | | | WO | 2009-048770 | A2 | 16 April 2009 |
| | | | | WO | 2009-048770 | A3 | 23 July 2009 |
| KR | 10-0924910 | B1 | 03 November 2009 | None | | | |
| KR | 10-2021-0105514 | A | 27 August 2021 | None | | | |
| KR | 10-2009-0073566 | A | 03 July 2009 | KR | 10-1079004 | B1 | 01 November 2011 |
| CN | 101768809 | A | 07 July 2010 | None | | | |

Form PCT/ISA/210 (patent family annex) (July 2022)